# EUROPÄISCHE PATENTSCHRIFT

(11) **EP 2 917 619 B1**
(45) Veröffentlichungstag und Bekanntmachung des Hinweises auf die Patenterteilung: **11.01.2017**
(21) Anmeldenummer: 13786504.4
(22) Anmeldetag: 07.11.2013
(51) Int. Cl.: F16K 11/074, F16K 31/04

(54) **SCHEIBENVENTIL**
DISC VALVE
SOUPAPE À DISQUE

(30) Priorität: 07.11.2012 DE 102012022212
(43) Veröffentlichungstag der Anmeldung: 16.09.2015
(73) Patentinhaber: Mack & Schneider GmbH, 70794 Filderstadt (DE)
(72) Erfinder: BACHOFER, Steffen, 70794 Filderstadt (DE)
(74) Vertreter: Clarenbach, Carl-Philipp
(86) Internationale Anmeldenummer: PCT/EP2013/073224
(87) Internationale Veröffentlichungsnummer: WO 2014/072379

(56) Entgegenhaltungen:
- WO-A1-01/06156
- US-A- 5 950 576
- US-A1- 2006 032 540

## Beschreibung

Die Erfindung betrifft ein Scheibenventil, insbesondere ein Mehrwege-Regulierventil, gemäss den oberbegrifflichen Merkmalen von Anspruch 1, wie beispielsweise aus Dokument WO-A-01/06156 bekannt.

Scheibenventile werden beispielsweise in Kraftfahrzeugen zur Regulierung von Kühlwasserkreisläufen oder auch bei Getränkeautomaten eingesetzt.

Aus der DE 10 2006 049 894 B3 ist beispielsweise ein Scheibenventil bekannt, bei welchem in einem zweiteiligen Gehäuse eine drehbar gelagerte keramische Ventilscheibe zwischen zwei starren Dichtscheiben angeordnet und mittels eines Käfigs verdrehbar ist, um durch Einstellen einer gewünschten Drehposition zwischen einer Durchströmungsöffnung der Ventilscheibe und einer Durchströmungsöffnung der Dichtscheiben einen gewünschten Durchströmungsquerschnitt einzustellen, um flüssiges Medium von einem Zulaufanschluss zu einem Ablaufanschluss zu leiten.

Aus der US 5,950,576 ist weiterhin ein Scheibenventil bekannt, bei welchem die Ventilscheibe drehfest mit einer Steuerwelle verbunden ist, die zum Betätigen des Scheibenventils dient. Auch hierbei wird durch Verdrehen der Ventilscheibe ein gewünschter Durchströmungsquerschnitt eingestellt, um eine Steuerung beziehungsweise Regulierung eines gewünschten Medienstroms zu bewirken.

Die gattungsbildende Offenlegungsschrift WO 01/06156 A1 offenbart ein Scheibenventil, das eine Ventilscheibe mit wenigstens einer Durchströmungsöffnung aufweist, die drehbar gelagert in einem Gehäuse angeordnet ist, und eine Steuerwelle, die drehfest mit der Ventilscheibe zu ihrer Betätigung verbunden ist. An der Steuerwelle ist ein Mitnehmer angeordnet, der einen Anschlag aufweist, der in Zusammenwirkung mit einem Anschlag des Gehäuses die Rotationsbewegung des Mitnehmers und dann mit der Steuerwelle begrenzt. Das Gehäuse weist außerdem eine Lageröffnung auf, durch welche die Steuerwelle im montierten Zustand nach außen geführt ist.

Nachteilig bei den bekannten Scheibenventilen ist es, dass bei der Montage sehr genau auf die korrekte Ausgangsstellung und Verbindung der Ventilscheibe und der Steuerwelle geachtet werden muss, um anschließend beim Betätigen der Steuerwelle den gewünschten Durchströmungsquerschnitt einstellen zu können. Häufig bedarf die genaue Einstellung einer nachträglichen Prüfung der Drehstellung der Steuerwelle bezüglich dem tatsächlich vorliegenden Medienstroms.

Der Erfindung liegt somit die Aufgabe zugrunde, auf einfache und kostengünstige Art und Weise ein verbessertes Scheibenventil zu schaffen.

Die der Erfindung zugrundeliegende Aufgabe wird durch ein Scheibenventil mit den Merkmalen des Anspruchs 1 gelöst. Das Scheibenventil hat den Vorteil, dass die Ventilscheibe bei der Montage oder bei einer Erstbetätigung in eine mechanisch definierte Ausgangsposition bringbar ist, in welcher der vorliegende Durchströmungsquerschnitt bekannt ist, und ausgehend von welcher aus ein Verdrehen um einen bestimmten Verdrehwinkel zu einer erwartungsgemäßen Einstellung des Medienstroms führt. Das erfindungsgemäße Scheibenventil zeichnet sich dadurch aus, dass die Ventilscheibe und/oder die Steuerwelle einen Radialvorsprung aufweisen, und dass das Gehäuse wenigstens einen Drehanschlag aufweist, der im Bewegungsweg des Radialvorsprungs liegt. Der Radialvorsprung bildet zusammen mit dem Drehanschlag des Gehäuses eine Drehwinkelbegrenzung für die Steuerwelle beziehungsweise die Ventilscheibe. Wird nach der Montage die Steuerwelle entsprechend weit verdreht, bis der Radialvorsprung an dem Drehanschlag anliegt, ist die Drehwinkelstellung der Steuerwelle beziehungsweise der Ventilscheibe bekannt. Ist der Radialvorsprung nicht an der Ventilscheibe, sondern an der Steuerwelle vorgesehen, kann bei der Vormontage von Steuerwelle und Ventilscheibe die Drehwinkelstellung zwischen Ventilscheibe und Steuerwelle auf einfache Art und Weise festgelegt werden. Da Ventilscheibe und Steuerwelle drehfest miteinander verbunden sind, ändert sich deren Relativposition zueinander nicht, so dass bei der anschließenden Montage dieser Vormontagebaugruppe in dem Gehäuse des Scheibenventils die Lage der Ventilscheibe bezüglich der Steuerwelle und des Verdrehanschlags bekannt ist. Ist der Radialvorsprung direkt an der Ventilscheibe vorgesehen, erübrigt sich das Vorsehen einer bestimmten Drehwinkelposition zwischen Steuerwelle und Ventilscheibe bei der Vormontage. In jedem Fall ist ein anschließender Prüfvorgang, bei welchem die Drehwinkelstellung der Steuerwelle mit dem tatsächlich eingestellten Volumenstrom verglichen wird, hinfällig. Dadurch werden die Herstellung und die Wartung des Scheibenventils in Hinblick auf Zeit und Kosten optimiert.

Erfindungsgemäß ist vorgesehen, dass das Gehäuse ein zumindest im Wesentlichen becherförmiges Verteilergehäuse sowie einen das Verteilergehäuse verschließenden Deckel aufweist. Eine derartige Teilung des Gehäuses erleichtert die Abdichtung des Gehäuses insgesamt, da keine komplizierten Dichtstellen zwischen den Gehäuseteilen im Bereich der Ventilscheibe vorgesehen werden müssen. Durch die Becherform des Verteilergehäuses kann die Steuerwelle zusammen mit der drehfest an ihr befestigten Ventilscheibe einfach in das Verteilergehäuse axial eingeschoben werden, so dass die durch die Ventilscheibe gewünschte Dichtfunktion innerhalb des Verteilergehäuses liegt. Die unterschiedlichen Kammern werden dabei bevorzugt zumindest teilweise durch axial ausgerichtete Trennwände in dem becherförmigen Verteilergehäuse gebildet, die insbesondere einstückig mit dem Ventilgehäuse ausgebildet sind. Durch die axial verlaufenden Trennwände lässt sich das Bechergehäuse auf einfache Art und Weise herstellen, beispielsweise durch Spritzgießen, ohne dass besondere Vorkehrungen für Hinterschnitte vorgesehen werden müssen.

Erfindungsgemäß weist der Deckel eine Lageröffnung auf, durch welche die Steuerwelle mit einem Koppelende nach außen geführt ist, und in welcher die Steuerwelle drehbar gelagert ist. Das aus dem Gehäuse herausragende Koppelende der Steuerwelle ist beispielsweise mit einem Profil, insbesondere Zahnprofil oder Polygonprofil, versehen, mittels dessen die Steuerwelle durch eine Antriebseinheit, insbesondere eine elektromotorische Antriebseinheit einer Steuereinrichtung des Scheibenventils, antreibbar beziehungsweise verstellbar ist. Die Lageröffnung ist bevorzugt derart ausgebildet, dass sie zusammen mit der Steuerwelle ein Gleitlager bildet. Besonders bevorzugt ist im Bereich der Lageröffnung auch eine Dichtung vorgesehen, die das Gehäuse nach außen abdichtet, so dass kein Medium durch die Lageröffnung austreten kann. Die Steuerwelle ist somit vorzugsweise abdichtend durch die Lageröffnung geführt. Selbstverständlich ist es auch denkbar, der Lageröffnung ein Wälzlager zum Lagern der Steuerwelle zuzuordnen.

Gemäß einer vorteilhaften Weiterbildung der Erfindung ist vorgesehen, dass der wenigstens eine Drehanschlag an dem Deckel angeordnet, insbesondere einstückig mit dem Deckel ausgebildet ist. Dabei kann der Anschlag beispielsweise als Steg an der dem Ventilgehäuse zugewandten Unterseite des Deckels ausgebildet sein. Deckel und Verteilergehäuse sind vorzugsweise derart ausgebildet, dass sie nur in einer bestimmten Stellung miteinander verbindbar sind, so dass die Lage des deckelseitigen Anschlags in dem Gehäuse eindeutig ist. Die bevorzugte einstückige Ausbildung des Anschlags mit dem Gehäuse, insbesondere mit dem Deckel, vereinfacht die Montage weiter.

Weiterhin ist bevorzugt vorgesehen, dass die Steuerwelle mindestens einen radial vorstehenden Stützvorsprung aufweist, der einen ersten Axialanschlag für ein zwischen dem Stützvorsprung der Ventilscheibe vorgespannt gehaltenes Federelement bildet. Die Steuerwelle übernimmt somit noch eine weitere Funktion, nämlich eine Abstützfunktion für ein die Ventilscheibe vorspannendes Federelement. Vorzugsweise ist das Federelement als Schraubenfeder ausgebildet, die kostengünstig die Vorspannkraft bereitstellen kann. Durch die Vorspannkraft wird insbesondere ein dichter Sitz der Ventilscheibe in dem Gehäuse gewährleistet, so dass, wenn sich die Ventilscheibe in einer Schließstellung befindet, in der mittels der Durchströmungsöffnung kein Durchströmungsquerschnitt freigegeben wird, kein Medium an der Dichtscheibe vorbei strömen kann. Der Stützvorsprung kann dabei als ein sich über den gesamten Umfang erstreckender Radialsteg ausgebildet sein. Bevorzugt ist vorgesehen, dass mehrere Stützvorsprünge über den Umfang der Steuerwelle verteilt angeordnet sind. Insbesondere sind die Stützvorsprünge gleichmäßig über den Umfang verteilt angeordnet und bilden zusammen den ersten Axialanschlag für das Federelement, insbesondere für die Schraubenfeder. Durch Vorsehen mehrerer einzelner Stützvorsprünge wir das Gewicht der Steuerwelle reduziert und das Aufnahmevolumen des Gehäuses vergrößert.

Gemäß einer vorteilhaften Weiterbildung der Erfindung ist vorgesehen, dass die Steuerwelle durch eine Verdrehsicherung mit der Ventilscheibe verbunden ist. Die Verdrehsicherung sichert im Betrieb stets die relative Drehwinkelstellung zwischen der Ventilscheibe und der Steuerwelle.

Bevorzugt ist die Verdrehsicherung von einem Formschluss zwischen der Steuerwelle und der Ventilscheibe gebildet. Der Formschluss ist hierzu derart ausgebildet, dass er Kräfte in Umfangsrichtung gesehen von der Steuerwelle auf die Ventilscheibe und anders herum formschlüssig überträgt. Ein Verdrehen von Ventilscheibe zu Steuerwelle wird dadurch sicher und dauerhaft verhindert.

Gemäß einer vorteilhaften Weiterbildung der Erfindung ist vorgesehen, dass die Verdrehsicherung ein Zwischenelement aufweist, das durch einen Formschluss drehfest mit der Steuerwelle und durch einen weiteren Formschluss drehfest mit der Ventilscheibe verbunden ist. Der Vorteil des zusätzlichen Zwischenelements liegt darin, dass es wie ein Adapter zwischen Steuerwelle und Ventilscheibe wirkt, so dass das Scheibenventil auf einfache Art und Weise aus einem Baukastensystem herstellbar ist, wobei durch Auswählen eines entsprechenden Zwischenelementes die gewünschte Ventilscheibe mit der Steuerwelle verbindbar ist. Die Ventilscheiben des Baukastensystems können sich dabei beispielsweise in der Art und Anzahl ihrer Durchströmungsöffnungen und auch bezüglich ihres maximalen Außendurchmessers unterscheiden.

Besonders bevorzugt ist vorgesehen, dass das Zwischenelement wenigstens eine, zumindest bereichsweise elastisch verformbare Klemmrippe aufweist, um eine Vormontage von Steuerwelle, Federelement, Zwischenelement und gegebenenfalls Ventilscheibe zu ermöglichen. Die Klemmrippe sorgt aufgrund ihrer elastischen Verformbarkeit für einen Reibschluss, der das Zwischenelement an der Steuerwelle oder an der Ventilscheibe, insbesondere an Steuerwelle und Ventilscheibe, arretiert. Dazu wird zunächst das Federelement beziehungsweise die Schraubenfeder auf die Steuerwelle bis an den Axialanschlag aufgeschoben, anschließend das Zwischenelement und zuletzt die Ventilscheibe. Vorzugsweise weist das Zwischenelement für die Dichtscheibe, für das Federelement und/oder für die Steuerwelle jeweils mindestens eine, vorzugsweise jeweils mehrere Klemmrippen auf. Aufgrund der Verdrehsicherung und der mindestens einen Klemmrippe wird eine kompakte und einfach handhabbare Vormontagebaugruppe geboten. Zweckmäßigerweise ist der durch die mindestens eine Klemmrippe bewirkte Reibschluss derart ausgebildet, dass die Reibkraft durch die Federkraft des Federelementes ab einer bestimmten Vorspannung des Federelementes überwunden wird, so dass bei der Montage, wenn die Vormontagebaugruppe in das Verteilergehäuse eingebracht und der Deckel auf die Steuerwelle und das Verteilergehäuse aufgeschoben wird, der Reibschluss überwunden wird, so dass die Vorspannkraft des Federelementes sich auf die Dichtscheibe auswirken kann. Die Steuerwelle weist hierzu zweckmäßigerweise einen zweiten Axialanschlag auf, der mit dem Deckel zusammenwirkt, so dass die Steuerwelle axial an dem Deckel anstößt. Besonders bevorzugt wird der zweite Axialanschlag von dem zuvor erwähnten mindestens einen Stützvorsprung auf der dem ersten Axialanschlag abgewandten Seite gebildet.

Weiterhin ist erfindungsgemäß vorgesehen, dass die Steuerwelle mit einem dem Koppelende gegenüberliegenden Ende durch die Ventilscheibe hindurchragt und in einer an der Ventilscheibe flächig anliegenden, mindestens eine zweite Durchströmungsöffnung aufweisenden und drehfest im Gehäuse gelagerten Dichtscheibe, insbesondere Keramikdichtscheibe, drehbar gelagert ist. Während die Lageröffnung vorzugsweise das erste Lager bildet, bildet die Dichtscheibe bevorzugt das zweite Lager für die Steuerwelle. Die Ventilscheibe liegt flächig an der Dichtscheibe an und wird mittels der Steuerwelle relativ zu dieser verdreht, um einen Durchströmungsquerschnitt mittels der ersten und der zweiten Durchströmungsöffnung einzustellen. Durch die drehfeste Anordnung der Dichtscheibe in dem Gehäuse eignet sich diese ebenfalls zur Lagerung der Steuerwelle und weist hierzu zweckmäßigerweise eine entsprechende Aufnahme beziehungsweise Lagerbohrung/Lageröffnung zur Aufnahme des Wellenendes der Steuerwelle auf.

Besonders bevorzugt liegen die Ventilscheibe und die Dichtscheibe zwischen zumindest einer ersten der Kammern und zumindest einer zweiten der Kammern, um diese Kammern voneinander zu trennen oder entsprechend der Verdrehstellung fluidtechnisch miteinander zu verbinden. Einer der Anschlüsse des Verteilergehäuses ist dabei bevorzugt auf einer Seite von Ventilscheibe und Dichtscheibe vorgesehen - in Längserstreckung beziehungsweise Axialerstreckung des Verteilergehäuses gesehen - und ein anderer Anschluss auf der anderen Seite. Entsprechend sind auch die unterschiedlichen Kammern in dem Gehäuse angeordnet.

Gemäß einer weiteren vorteilhaften Weiterbildung der Erfindung ist vorgesehen, dass die Dichtscheibe zwischen der Ventilscheibe und einem Zwischenboden des Verteilergehäuses angeordnet ist. Das Verteilergehäuse weist also einen Zwischenboden auf, auf welchem die Dichtscheibe bereichsweise aufliegt. Der Zwischenboden dient insofern als axiale Abstützung für die Dichtscheibe, gegen welche die Ventilscheibe von der anderen Seite mittels des Federelements gedrängt wird. Der Zwischenboden wird zweckmäßigerweise von der freien Stirnseiten der mindestens einen die Kammern einteilenden Trennwand gebildet. Zweckmäßigerweise ist die mindestens eine Trennwand einstückig mit dem Verteilergehäuse ausgebildet, so dass sie auf einfache Art und Weise eine sichere Abstützung für die Dichtscheibe bildet.

Besonders bevorzugt entspricht die Kontur der Dichtscheibe zumindest im Wesentlichen der Kontur des Zwischenbodens. Dadurch liegt die Dichtscheibe mehr oder weniger bündig auf dem Zwischenboden auf, so dass ihre mindestens eine Durchströmungsöffnung bevorzugt der Kontur einer der Kammern entspricht. Dadurch wird unter anderem gewährleistet, dass mittels der Dichtscheibe die Dichtung zwischen den unterschiedlichen Kammern, wenn sich die Ventilscheibe in einer Schließstellung befindet, in welcher die Durchströmungsöffnung von Ventilscheibe und Dichtscheibe keine Überschneidung aufweisen, gewährleistet ist.

Gemäß einer vorteilhaften Weiterbildung der Erfindung ist vorgesehen, dass zwischen der Dichtscheibe und dem Boden ein Dichtelement, insbesondere eine Profildichtung mit einer Kontur, die der Kontur der Dichtscheibe und/oder des Zwischenbodens entspricht, das/die insbesondere aus einem elastisch verformbaren Material besteht, vorgesehen ist. Die elastisch verformbare Profildichtung erhöht die Dichtwirkung insbesondere dann, wenn es sich bei der Dichtscheibe um eine Keramikdichtscheibe handelt. In jedem Fall wird jedoch die Dichtwirkung verbessert, insbesondere, weil durch elastische Verformbarkeit der Profildichtung ein durchgehender Anlagekontakt zwischen Dichtscheibe und Profildichtung, beziehungsweise zwischen Profildichtung und Zwischenboden gewährleistet ist.

Weiterhin ist bevorzugt vorgesehen, dass die Verdrehsicherung asymmetrisch ausgebildet ist, um eine Fehlmontage zu vermeiden. Die Verdrehsicherung erlaubt die Verbindung von Zwischenelement und Ventilscheibe und/oder von Steuerwelle und Zwischenelement nur in einer vorbestimmten Drehstellung zueinander. Durch diese so genannte Poka-Yoke-Konstruktion, die auf einfache Art und Weise durch einen asymmetrischen Querschnitt von Steuerwelle, Zwischenelement und der entsprechenden Gegenkontur der Dichtscheibe für das Zwischenelement, gebildet wird, kann auf einfache Art und Weise eine Fehlmontage vermieden werden.

Im Folgenden soll die Erfindung anhand der Zeichnung näher erläutert werden. Dazu zeigen:
- Figur 1: ein Scheibenventil in einer perspektivischen Darstellung,
- Figur 2: das Scheibenventil in einer Längsschnittdarstellung,
- Figur 3: das Scheibenventil in einer Querschnittsdarstellung,
- Figuren 4A und 4B: eine Dichtscheibe des Scheibenventils in unterschiedlichen perspektivischen Darstellungen,
- Figur 5: eine mit der Dichtscheibe zusammenwirkende Ventilscheibe in einer perspektivischen Darstellung,
- Figur 6: eine Vormontagebaugruppe des Scheibenventils in einer perspektivischen Darstellung,
- Figuren 7A und 7B: eine Verdrehsicherung des Scheibenventils in unterschiedlichen Darstellungen,
- Figur 8: eine Arretiervorrichtung der Vormontagebaugruppe und
- Figur 9: einen Deckel des Scheibenventils in einer perspektivischen Darstellung.

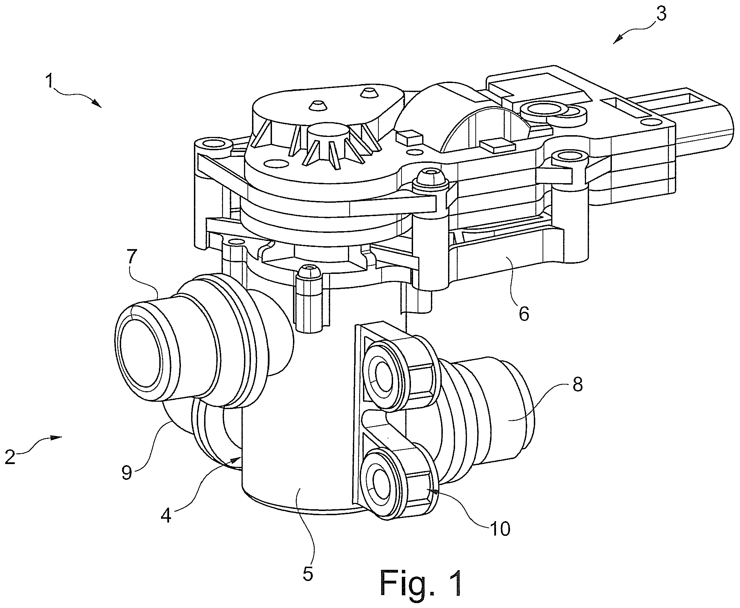

Figur 1 zeigt eine Ventileinrichtung 1, die ein Scheibenventil 2 sowie einen Stellantrieb 3 aufweist, in einer perspektivischen Darstellung.

Das Scheibenventil 2 weist ein Gehäuse 4 auf, welches von einem Verteilergehäuse 5 und einem Deckel 6 gebildet wird. Das Verteilergehäuse 5 weist drei Anschlüsse auf, von denen einer als Zulaufanschluss 7, und die beiden anderen als Ablaufanschlüsse 8 beziehungsweise 9 ausgebildet sind. Außerdem weist das Verteilergehäuse 5 eine Haltevorrichtung 10 zum Befestigen der Ventileinrichtung 1, beispielsweise an einer Karosserie eines Kraftfahrzeugs, auf.

An dem Deckel ist der Stellantrieb 3 montiert, der insbesondere als elektromotorischer Stellantrieb 3 ausgebildet ist und hierzu einen nicht näher dargestellten Elektromotor sowie ein Getriebe aufweist, das mit einer Steuerwelle des Scheibenventils 2 koppelbar ist, um ein an dem Zulaufanschluss 7 bereitgestelltes Medium auf die Ablaufanschlüsse 8, 9 wunschgemäß zu verteilen.

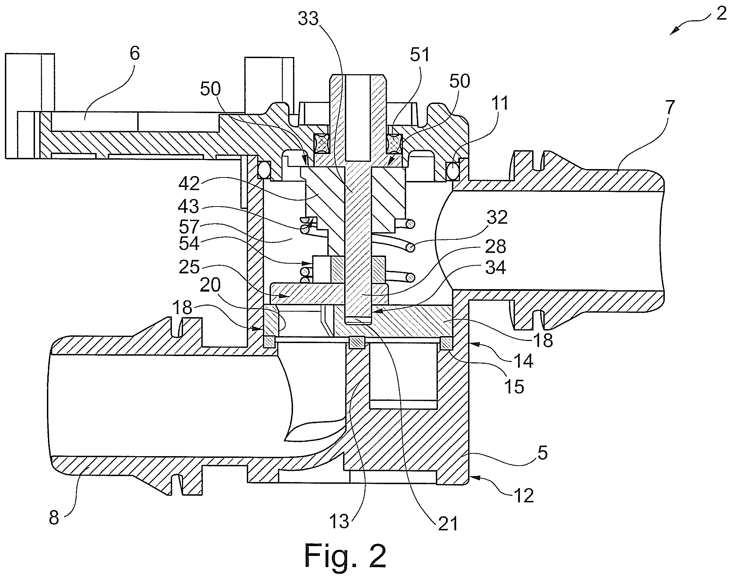

Figur 2 zeigt hierzu das Scheibenventil 2 in einer Längsschnittdarstellung. Das Verteilergehäuse 5 ist im Wesentlichen becherförmig ausgebildet, so dass es im Längsschnitt gesehen eine U-förmige Grundform aufweist. Die Anschlüsse 7, 8, 9 sind vorliegend einstückig mit dem Verteilergehäuse 5 ausgebildet. Der Deckel 6 verschließt das offene Ende des Verteilergehäuses 5, wobei zwischen Deckel 6 und Verteilergehäuse 5 zusätzlich ein Dichtungselement 11, das vorliegend als O-Ring ausgebildet ist, vorgesehen ist. Der Zulaufanschluss 7 mündet - axial gesehen - oberhalb des Ablaufanschluss 8 in das Verteilergehäuse 5, also nahe zu dem Deckel 6. Von dem dem Deckel 6 gegenüberliegenden Boden 12 des Verteilergehäuses 5 geht eine Trennwand 13 aus, die sich parallel zur Längserstreckung des Verteilergehäuses 5 beziehungsweise axial erstreckt und oberhalb des Anschlusses 8 einen Zwischenboden 14 mit ihrer freien Stirnseite bildend endet.

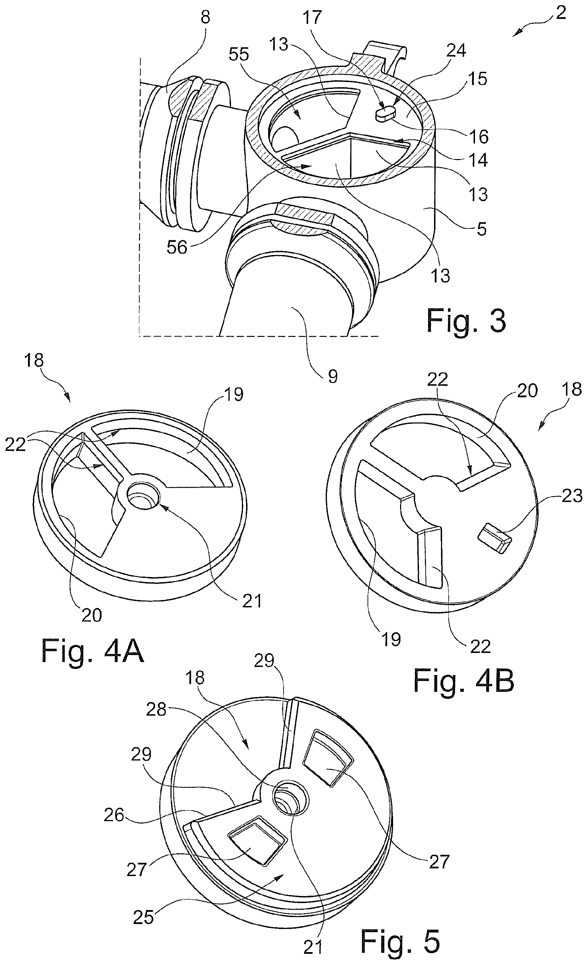

Figur 3 zeigt hierzu in einer Querschnittdarstellung des Scheibenventils 2 eine Draufsicht auf den Zwischenboden 14 beziehungsweise auf das Verteilergehäuse 5 oberhalb der Ablaufanschlüsse 8 und 9. Die Trennwand 13 bildet zwei Kammern 55, 56, in welche jeweils einer der Ablaufanschlüsse 8, 9 mündet. Die Kammern 55 und 56 machen dabei etwa zwei Drittel des Verteilgehäuses 5 aus, während ein verbleibendes Drittel von dem Zwischenboden 14 gebildet wird. Der Zwischenboden 14 erstreckt sich zum Teil stegförmig entlang der Innenseite der Gehäusewand über den gesamten Umfang des Verteilergehäuses 5, um eine durchgehende Auflagefläche zu bilden. Ergänzt wird er durch die freistehende Stirnseite der Trennwand 13. Die Kammern 55 und 56 erstrecken sich somit im Wesentlichen jeweils über ungefähr 120° des kreisförmigen Vertelergehäuses 5, während ein Großteil des Zwischenbodens 14 von den verbleibenden 120° durch die Trennwand 13 gebildet wird.

Auf dem Zwischenboden 14 liegt eine Profildichtung 15 auf, deren Kontur im Wesentlichen der Kontur des Zwischenbodens 14 entspricht und elastisch verformbar ausgebildet ist. Die Profildichtung 15 weist einen Durchbruch 16 auf, durch welchen ein Axialvorsprung 17 des Zwischenbodens 14 zum Bilden einer Verdrehsicherung 24 für die Profildichtung 15 hindurch ragt. Dabei ist die Höhe des Axialvorsprungs 17 derart gewählt, dass sie über die Profildichtung 15 hinaus vorsteht.

Figuren 4A und 4B zeigen eine keramische Dichtscheibe 18 in zwei perspektivischen Darstellungen. Gemäß Figur 2 liegt die Dichtscheibe 18 auf der Profildichtung 15 auf, wobei die Kontur der Dichtscheibe 18 zumindest im Wesentlichen der Kontur der Profildichtung 15 beziehungsweise des Zwischenbodens 14 entspricht.

Figur 4A zeigt eine Draufsicht auf die Dichtscheibe 18 aus Richtung des Deckels 6 gemäß Figur 2. Die Dichtscheibe 18 weist zwei Durchströmungsöffnungen 19, 20 auf, die ebenfalls jeweils ein Kreissegment darstellen, das sich über etwa 120° entsprechend den Kammern 55 und 56 erstreckt. Auf der dem Deckel 16 zugewandten Stirnseite weist die Dichtscheibe 18 außerdem eine Lageraufnahme 21 auf, die mittig in der Dichtscheibe 18 als zylinderförmige Vertiefung ausgebildet ist. Auf der gleichen Stirnseite sind außerdem die Durchströmungsöffnungen 19, 20 jeweils mit einer Anphasung 22 versehen, die zur Verbesserung der Strömungsverhältnisse dienen.

Vorteilhafterweise sind derartige Anphasungen 22 auch auf der Rückseite der Dichtscheibe 18 im Bereich der Durchströmungsöffnungen 19, 20 vorgesehen, wie in Figur 4B gezeigt. Außerdem weist die Dichtscheibe 18 auf ihrer dem Deckel 16 abgewandten Stirnseite eine Aufnahmevertiefung 23 auf, deren Kontur im Wesentlichen der Kontur des Axialvorsprungs 17 entspricht und zur zumindest bereichsweisen Aufnahme des Axialvorsprungs 17 dient, um eine Verdrehsicherung für die Dichtscheibe 18 auf dem Zwischenboden 14 zu bilden. Durch diese und durch die formschlüssige Verdrehsicherung 24 wird eine sichere Anordnung der Drehscheibe 18 und der Profildichtung 15 in dem Verteilergehäuse 5 auf einfache und kostengünstige Art und Weise gewährleistet.

Figur 5 zeigt eine weitere Draufsicht auf die Dichtscheibe 18, und zwar auf die dem Deckel zugewandte Stirnseite. Dabei ist auf der Dichtscheibe 18 außerdem eine Ventilscheibe 25 angeordnet, die ebenfalls aus Keramik hergestellt ist, und deren Außendurchmesser im Wesentlichen dem Außendurchmesser der Dichtscheibe 18 entspricht. Im vorliegenden Ausführungsbeispiel ist der Außendurchmesser der Ventilscheibe 25 geringfügig kleiner ausgebildet, um einen Reibkontakt mit der Oberfläche der Innenseite des Verteilergehäuses 5 zu vermeiden, wie auch in Figur 2 gezeigt. Die Ventilscheibe 25 ist kreissegmentförmig ausgebildet und erstreckt sich über ein Kreissegment von etwa 240°. Die verbleibenden 120° der Ventilscheibe 25 sind frei und randoffen ausgebildet, um eine Durchströmungsöffnung 26 zu bilden, die bei einer Überlappungsstellung mit zumindest einer der Durchströmungsöffnungen 19, 20 der Dichtscheibe 18 einen Durchströmungsquerschnitt einstellt. Je nach Drehstellung der Ventilscheibe 25 ist somit ein gewünschter Durchströmungsquerschnitt zwischen dem Zulaufanschluss 7 und zumindest einem der Ablaufanschlüsse 8, 9 einstellbar. Die Ventilscheibe 25 liegt flächig auf der Dichtscheibe 18 auf und weist auf ihrer der Ventilscheibe 18 abgewandten Stirnseite zwei wannenförmige Aussparungen 27 auf, die beidseitig des Mittelpunkts der Ventilscheibe 25 angeordnet und spiegelsymmetrisch, jedoch nicht punktsymmetrisch ausgebildet sind, so dass eine Falschmontage des Scheibenventils 2, wie später näher erläutert, vermieden wird. Weiterhin weist die Ventilscheibe 25 mittig einen kreisförmigen Durchbruch 28 auf, der eine Verlängerung der Lageraufnahme 21 bildet und insofern ebenfalls eine kreisförmige Kontur aufweist. Auch die Ventilscheibe 25 ist an der Durchströmungsöffnung 26 mit Anphasungen 29 für ein verbessertes Durchströmungsverhalten versehen.

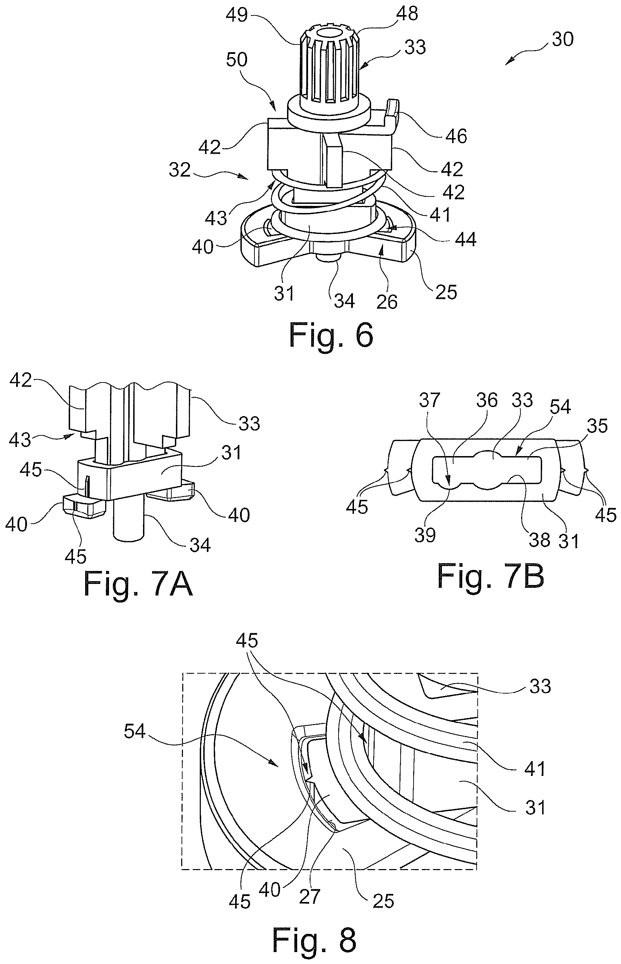

Figur 6 zeigt in einer perspektivischen Darstellung eine Vormontagebaugruppe 30, die aus der Ventilscheibe 25, einem Zwischenelement 31, einem Federelement 32 und einer Steuerwelle 33 besteht.

Die Steuerwelle 33 ragt mit einem freien Ende 34 durch den Durchbruch 28 der Ventilscheibe 25 hindurch, um wie in Figur 2 gezeigt, in die Lageraufnahme 21 einzugreifen. Dazu ist das freie Ende 34 der Steuerwelle 33 ebenfalls kreiszylinderförmig ausgebildet, wobei der Außendurchmesser des freien Endes 34 und der Innendurchmesser der Lageraufnahme 21 derart gewählt sind, dass sie zusammen eine Radialgleitlagerung für die Steuerwelle 33 bilden.

Beabstandet zu dem freien Ende 34 weist die Steuerwelle 33, wie in Figuren 7A und 7B näher dargestellt, eine asymmetrische Querschnittskontur auf. Figur 7B zeigt hierzu einen Querschnitt durch die Steuerwelle 33 im Bereich des Zwischenelementes 31. Die Steuerwelle 33 weist hierbei zwei sich gegenüberliegende radial von der Steuerwelle 33 abstehende Vorsprünge 35, 36 auf, wobei der Vorsprung 36 an einer Seitenwand einen zusätzlichen Vorsprung 37 aufweist, der im vorliegenden Ausführungsbeispiel eine gewölbte Kontur aufweist. Das Zwischenelement 31 weist eine der Kontur der Steuerwelle 33 im Bereich der Vorsprünge 36, 35 entsprechende Öffnung 38 auf. Die Öffnung 38 weist seitlich eine zusätzliche Vertiefung 39 auf, in welche der zusätzliche Vorsprung 37 einschiebbar ist. Die Steuerwelle 33 und das Zwischenelement 31 können somit nur auf eine einzige Art und Weise miteinander verbunden werden. Eine Falschmontage wird dadurch sicher verhindert.

Figur 7A zeigt eine perspektivische Darstellung der Steuerwelle 33 mit dem Zwischenelement 31. Das Zwischenelement 31 weist auf seiner der Ventilscheibe 25 zugewandten Seite zwei Stützfüße 40 auf, die vorzugsweise einstückig mit dem Zwischenelement 31 ausgebildet und in die Aussparungen 27 der Ventilscheibe 25 einbringbar sind beziehungsweise eingreifen. Aufgrund der asymmetrischen Formgebung der Aussparungen 27 und der asymmetrischen Ausbildung der Stützfüße 40 ist auch hier nur eine einzige Montageposition für Steuerwelle 33 und Ventilscheibe 25 möglich. Dadurch wird insgesamt eine zwischen Steuerwelle 33 und Ventilscheibe 25 formschlüssig wirkende Verdrehsicherung 54 gebildet.

Das Federelement 32 ist im vorliegenden Ausführungsbeispiel als Schraubenfeder 41 ausgebildet. Die Schraubenfeder 41 ist zwischen den seitlich vorstehenden Stützfüßen 40 des Zwischenelements 31 und mehreren radial vorstehenden Stützvorsprüngen 42 der Steuerwelle 33 axial gehalten. Die Stützvorsprünge 42 sind gleichmäßig über den Umfang der Steuerwelle 33 verteilt angeordnet und einstückig mit dieser ausgebildet. Vorzugsweise gehen zwei gegenüberliegende Stützvorsprünge 42 dabei in die seitlichen Vorsprünge 35 und 26 über. Die Stützvorsprünge 42 bilden zusammen einen ersten Axialanschlag 43 für die Schraubenfeder 41, während die Stützfüße 40 einen zweiten Axialanschlag für die Schraubenfeder 41 bilden. Bei der Vormontage wird die Schraubenfeder 41 auf die Steuerwelle 33 bis an den ersten Axialanschlag 43 aufgeschoben, anschließend wird das Zwischenelement 31 wie zuvor beschrieben auf die Steuerwelle 33 aufgeschoben und zuletzt die Ventilscheibe 25, so dass die Füße 40 in die Aussparungen 27 eingreifen.

Zur Arretierung der Vormontagebaugruppe 30 weist das Zwischenelement 31 mehrere elastisch verformbare Klemmrippen 45 auf, die sich parallel zur Längserstreckung des Scheibenventils 2 beziehungsweise zur Drehachse der Steuerwelle 33 stegförmig erstrecken, wie in Figur 8 dargestellt. Die Dimensionierung der Klemmrippen 45 ist dabei derart gewählt, dass ein Reibschluss zwischen Zwischenelement 31 und der Schraubenfeder 41 sowie zwischen Zwischenelement 31 und Ventilscheibe 25 aufgrund der durch die Elastizität bereitgestellten Vorspannkraft entsteht, der den Zusammenhalt der Vormontagebaugruppe 30 gewährleistet.

Weiterhin ist vorgesehen, dass die Steuerwelle 33 auf der dem Federelement 41 abgewandten Seite der Stützvorsprünge 42 einen Radialvorsprung 46 aufweist, wie in Figur 6 gezeigt. Bezüglich der Vorsprünge 35 und 36 ist der Radialvorsprung 46 in einer bestimmten, vordefinierten Relativposition an der Steuerwelle 33 angeordnet und insbesondere einstückig mit dieser ausgebildet, so das bei der Montage des Scheibenventils 2 beziehungsweise der Vormontagebaugruppe 30 eine eindeutige Relativposition von der Ventilscheibe 25 zu dem Radialvorsprung 46 besteht. Dies wird durch die jeweiligen, nur eine Montagemöglichkeit bietenden Verbindungen gewährleistet.

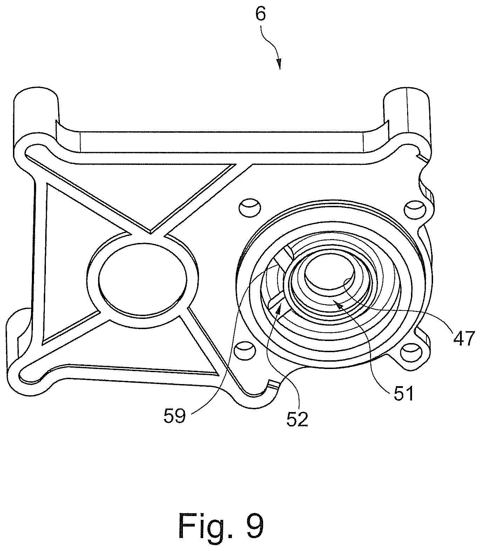

Figur 9 zeigt den Deckel 6 in einer perspektivischen Darstellung von unten beziehungsweise aus Sicht des Verteilergehäuses 5. Der Deckel 6 weist eine Lageröffnung 47 auf, durch welche das dem freien Ende 34 gegenüberliegende Ende der Steuerwelle 33 durchführbar ist. Dieses Ende ist als Koppelende 48 ausgebildet und weist dazu an seinem Außenumfang eine Außenverzahnung 49 auf, die mit dem Stellantrieb 3 koppelbar beziehungsweise in Wirkverbindung bringbar ist. Wie in Figur 2 gezeigt, bilden die Stützvorsprünge 42 auf ihrer dem ersten Axialanschlag 43 gegenüberliegenden Seite einen zweiten Axialanschlag 50, mit welchem sich die Steuerwelle 33 an der Innenseite des Deckels 6 abstützt. Zur Abdichtung ist vorteilhafterweise ein Dichtring 51 vorgesehen. Die Lageröffnung 47 sowie das Koppelende 48 der Steuerwelle 33 sind derart ausgebildet, dass die Steuerwelle 33 in der Lageröffnung 47 radial und an dem Deckel 6 axial gelagert ist.

Wie aus Figur 9 hervorgeht, weist der Deckel 6 an seiner Unterseite außerdem zwei Drehanschläge 52 und 53 auf, die von jeweils einem Axialvorsprung auf der Unterseite des Deckels gebildet werden, und, die im montierten Zustand des Scheibenventils 2 im Bewegungsweg des Radialvorsprungs 46 liegen. Wird die Steuerwelle 33 mittels des Stellantriebs 3 betätigt, so lässt sie sich nur zwischen den zwei durch Drehanschläge 42 und 43 definierten Positionen verdrehen, bis jeweils der Radialvorsprung 46 gegen einen der Drehanschläge 52 oder 53 stößt. Natürlich können die Drehaufschläge 52 und 53 auch von einem einzigen, entsprechend breiten beziehungsweise geformten Vorsprung des Deckels 6 gebildet werden.

Der Deckel 6 sowie das Verteilergehäuse 5 sind derart ausgebildet, dass sie nur in einer bestimmten Relativposition zueinander miteinander verbunden werden können, so dass der Deckel 6 eine eindeutige Ausrichtung auf dem Verteilergehäuse 5 erfährt. Dadurch liegen die Drehanschläge 53 und 52 auf bekannten Positionen bezüglich der Kammern 55, 56 beziehungsweise bezüglich der Durchströmungsöffnungen 19 und 20. Durch die drehfeste Verbindung der Ventilscheibe 25 mit der Steuerwelle 33 sowie die gehäusefeste Lage der Dichtscheibe 18, und die bekannte Anordnung des Radialvorsprungs sowie der Drehanschläge 52, 53, kann somit bei der Montage mittels des Stellantriebs das Scheibenventil 2 in eine eindeutige Ausgangsstellung verbracht werden, ohne dass dies anhand eines tatsächlich eingestellten Volumenstroms durch das Scheibenventil 2 hindurch verifiziert werden müsste.

Bei der Montage wird zunächst die Vormontagebaugruppe 30 gemäß Figur 6 zusammengesetzt. Anschließend wird die Vormontagebaugruppe in das Verteilergehäuse 5, in welchem bereits die Profildichtung 15 sowie die Dichtscheibe 18 angeordnet und gemäß des Axialvorsprungs 17 ausgerichtet sind, eingeführt, so dass das freie Ende 34 der Steuerwelle 33 in die Lageraufnahme 21 eingreift, wie in Figur 2 gezeigt. Anschließend wird der Deckel 6 mit der Lageröffnung 47 auf das Koppelende 48 der Steuerwelle 33 aufgeschoben und die Steuerwelle 33 aufgrund des ersten Axialanschlags 43 gegen die Schraubenfeder 41 verspannt, so dass die Ventilscheibe 25 gegen die Dichtscheibe 18 federbeaufschlagt gedrängt wird, so dass die Ventilscheibe 25 und die Dichtscheibe 18 dicht aneinander anliegen und ein ungewolltes Durchströmen des Scheibenventils 2 sicher verhindert wird. Der Deckel 6 kann beispielsweise mit dem Verteilergehäuse 5, wie, wie in Figur 1 dargestellt, verschraubt werden, um eine dauerhafte Verbindung des Gehäuses 4 zu gewährleisten. Dadurch, dass die Drehanschläge 52, 53 und der Radialvorsprung 46 innerhalb des Gehäuses 4 angeordnet sind, sind sie sicher vor äußeren Einflüssen geschützt und insofern weniger schmutzanfällig. Ventilscheibe 25 und Dichtscheibe 18 trennen oder verbinden, je nach Drehstellung der Ventilscheibe 25, die Kammern 55 und 56 von einer dem Zulaufanschluss 7 zugeordneten Kammer 57, die von dem Verteilergehäuse 5, dem Deckel 6 und der Ventilscheibe 25 und Dichtscheibe 18 begrenzt wird.

## Patentansprüche

1. Scheibenventil (2), insbesondere Mehrwege-Regulierventil, mit einem Gehäuse (4), das als Anschlüsse (7,8,9) für ein flüssiges und/oder gasförmiges Medium zumindest einen Zulaufanschluss (7) und zumindest einen Ablaufanschluss (8,9) aufweist, wobei die Anschlüsse (7,8,9) jeweils in unterschiedliche Kammern (55,56,57) des Gehäuses (4) münden, mit mindestens einer Ventilscheibe (25), insbesondere Keramikventilscheibe, die mit wenigstens einer ersten Durchströmungsöffnung (26) versehen und drehbar gelagert in dem Gehäuse (4) angeordnet ist, um in Abhängigkeit ihrer Drehstellung die unterschiedlichen Kammern (55,56,57) mittels der wenigstens einen Durchströmungsöffnung (26) fluidtechnisch miteinander zu verbinden und voneinander zu trennen, und mit einer Steuerwelle (33), die in dem Gehäuse (4) drehfest mit der Ventilscheibe (25) verbunden ist, wobei die Steuerwelle (33) oder die Ventilscheibe (25) wenigstens einen Radialvorsprung (46) aufweisen, und dass das Gehäuse (4) wenigstens einen Drehanschlag (52,53) aufweist, der im Bewegungsweg des Radialvorsprungs (46) liegt, wobei das Gehäuse (4) ein zumindest im Wesentlichen becherförmiges Verteilergehäuse (5) sowie einen das Verteilergehäuse (5) verschließenden Deckel (6) aufweist, und wobei der Deckel (6) eine Lageröffnung (47) aufweist, durch welche die Steuerwelle (33) mit einem Koppelende (48) nach außen geführt ist, und in welcher die Steuerwelle (33) drehbar gelagert ist, **dadurch gekennzeichnet, dass** die Steuerwelle (33) mit einem dem Koppelende (48) gegenüberliegenden Ende durch die Ventilscheibe (25) hindurch ragt und in einer an der Ventilscheibe (25) flächig anliegenden, mindestens eine zweite Durchströmungsöffnung (20) aufweisenden und drehfest in dem Gehäuse (4) gelagerten Dichtscheibe (18), insbesondere Keramikdichtscheibe, drehbar gelagert ist.

2. Scheibenventil nach Anspruch 1, **dadurch gekennzeichnet, dass** der wenigstens eine Drehanschlag (52,53) an dem Deckel (6) angeordnet, und insbesondere einstückig mit dem Deckel (6) ausgebildet ist.

3. Scheibenventil nach einem der vorhergehenden Ansprüche, **dadurch gekennzeichnet, dass** die Steuerwelle (33) mindestens einen radial vorstehenden Stützvorsprung (42) aufweist, der einen ersten Axialanschlag (43) für ein zwischen dem Stützvorsprung (42) und der Ventilscheibe (25) vorgespannt gehaltenes Federelement (32) bildet.

4. Scheibenventil nach einem der vorhergehenden Ansprüche, **dadurch gekennzeichnet, dass** die Steuerwelle (33) durch eine Verdrehsicherung (54) mit der Ventilscheibe (25) insbesondere formschlüssig verbunden ist.

5. Scheibenventil nach Anspruch 4,
**dadurch gekennzeichnet, dass** die Verdrehsicherung (54) ein Zwischenelement (31) aufweist, das durch einen Formschluss drehfest mit der Steuerwelle (33) und durch einen weiteren Formschluss drehfest mit der Ventilscheibe (25) verbunden ist.

6. Scheibenventil nach Anspruch 5,
**dadurch gekennzeichnet, dass** das Zwischenelement (31) wenigstens eine, zumindest bereichsweise elastisch verformbare Klemmrippe (45) aufweist, um eine Vormontage von Steuerwelle (33), Federelement (32), Zwischenelement (31) und Ventilscheibe (25) zu ermöglichen.

7. Scheibenventil nach einem der vorhergehenden Ansprüche, **dadurch gekennzeichnet, dass** die Ventilscheibe (25) und die Dichtscheibe (18) zwischen zumindest einer der Kammern (55,56) und zumindest einer weiteren der Kammern (57) liegen.

8. Scheibenventil nach einem der vorhergehenden Ansprüche, **dadurch gekennzeichnet, dass** die Dichtscheibe (18) zwischen der Ventilscheibe (25) und einem Zwischenboden (14) des Verteilergehäuses (5) angeordnet ist.

9. Scheibenventil nach Anspruch 8,
**dadurch gekennzeichnet, dass** die Kontur der Dichtscheibe (18) zumindest im Wesentlichen der Kontur des Zwischenbodens (14) entspricht.

10. Scheibenventil nach Anspruch 8 oder Anspruch 9,
**dadurch gekennzeichnet, dass** zwischen der Dichtscheibe (18) und dem Zwischenboden (14) ein Dichtelement, insbesondere eine Profildichtung (15) mit einer Kontur, die der Kontur der Dichtscheibe (18) und/oder des Zwischenbodens (14) entspricht und insbesondere aus einem elastisch verformbaren Material besteht, vorgesehen ist.

11. Scheibenventil nach einem der vorhergehenden Ansprüche 4-6,
**dadurch gekennzeichnet, dass** die Verdrehsicherung (54) asymmetrisch ausgebildet ist, um eine Fehlmontage zu vermeiden.

## Claims

1. A disc valve (2), in particular a multi-way control valve, having a housing (4) that has at least one inlet connection (7) and at least one outlet connection (8, 9) as connections (7, 8, 9) for a liquid and/or gaseous medium, wherein the connections (7, 8, 9) end in respectively different chambers (55, 56, 57) of the housing (4), having at least one valve disc (25), in particular a ceramic valve disc, which is provided with at least one first through-flow opening (26) and is arranged rotatably mounted in the housing (4) in order to fluidically connect and separate from each other the different chambers (55, 56, 57) depending on its rotational position by means of the at least one through-flow opening (26), and having a control shaft (33), which is connected torque-proof to the valve disc (25) in the housing (4), wherein the control shaft (33) or the valve disc (25) has at least one radial projection (46), and the housing (4) has at least one rotation stop (52, 53), which is located in the movement path of the radial projection (46), wherein the housing (4) has an at least basically cup-shaped distributor housing (5) as well as a cover (6) that closes off the distributor housing (5), and wherein the cover (6) has a bearing opening (47), through which the control shaft (33) can be guided outwardly with a coupling end (48), and in which the control shaft (33) is rotatably mounted, **characterized in that** the control shaft (33) protrudes through the valve disc (25) with an end that is located opposite the coupling end (48) and is rotatably mounted in a sealing disc (18), in particular a ceramic sealing disc, that rests flat on the valve disc (25), has at least one second through-flow opening (20), and is mounted torque-proof in the housing (4).

2. The disc valve according to claim 1, **characterized in that** the at least one rotation stop (52, 53) is arranged on the cover (6), and is especially configured in one piece with the cover (6).

3. A disc valve according to any one of the preceding claims, **characterized in that** the control shaft (33) has at least one radially projecting supporting projection (42), which forms a first axial stop (43) for a spring element (32), which is held in a preloaded manner between the supporting projection (42) and the valve disc (25).

4. A disc valve according to any one of the preceding claims, **characterized in that** the control shaft (33) is connected to the valve disc (25) in particular in a positive-locking manner by means of an anti-twist protection (54).

5. A disc valve according to claim 4, **characterized in that** the anti-twist protection (54) has an intermediate element (31), which is connected torque-proof to the control shaft (33) by means of a positive locking and to the valve disc (25) by means of a further positive locking.

6. A disc valve according to claim 5, **characterized in that** the intermediate element (31) has at least one clamping rib (45), which is elastically deformable in at least some sections in order to allow a preassembly of the control shaft (33), the spring element (32), the intermediate element (31) and the valve disc (25).

7. A disc valve according to any one of the preceding claims, **characterized in that** the valve disc (25) and the sealing disc (18) are located between at least one of the chambers (55, 56) and at least another one of the chambers (57).

8. A disc valve according to any one of the preceding claims, **characterized in that** the sealing disc (18) is arranged between the valve disc (25) and the intermediate floor (14) of the distributor housing (5).

9. A disc valve according to claim 8, **characterized in that** the contour of the sealing disc (18) at least essentially matches the contour of the intermediate floor (14).

10. A disc valve according to claim 8 or claim 9, **characterized in that** a sealing element, in particular a profile seal (15) having a contour that matches the contour of the sealing disc (18) and/or the intermediate floor (14) and in particular made of an elastically deformable material, is provided between the sealing disc (18) and the intermediate floor (14).

11. A disc valve according to any one of the preceding claims 4-6, **characterized in that** the anti-twist protection (54) is configured asymmetrically in order to prevent an incorrect assembly.

## Revendications

1. Soupape de disque (2), notamment soupape de réglage à plusieurs voies, avec un boîtier (4) ayant au moins une connexion d'entrée (7) et au moins une connexion de sortie (8, 9) en tant que connexions (7, 8, 9) pour un milieu liquide et/ou gazeux, les connexions (7, 8, 9) respectivement débouchant dans des chambres distinctes (55, 56, 57) du boîtier (4), avec au moins un disque de soupape (25), notamment un disque de soupape en céramique, qui est prévu avec au moins une première ouverture de passage (26) et est supportée en rotation dans le boîtier (4), afin de fluidiquement relier et séparer entre elles, en fonction de sa position de rotation, les chambres différentes (55, 56, 57) au moyen de l'au moins une ouverture de passage (26), et avec un arbre de commande (33) qui est relié de manière non-rotative avec le disque de soupape (25) dans le boîtier (4), l'arbre de commande (33) ou le disque de soupape (25) présentant au moins une saillie radiale (46), et le boîtier (4) présentant au moins une butée de rotation (52, 53) située dans le trajet de déplacement de la saillie radiale (46), le boîtier (4) présentant un boîtier de distribution (5) au moins sensiblement sous forme de coupe, et un couvercle (6) fermant le boîtier de distribution (5), le couvercle (6) ayant une ouverture de palier (47) à travers laquelle l'arbre de commande (33) est mené vers l'extérieur avec une extrémité d'accouplement (48), et dans laquelle l'arbre de commande (33) est supporté de manière rotative, **caractérisée en ce que** l'arbre de commande (33) passe, avec une extrémité opposée à l'extrémité d'accouplement (48), à travers le disque de soupape (25) et est supporté de manière rotative dans un disque d'étanchéité (18), notamment un disque d'étanchéité en céramique, qui est en contact face à face avec le disque de soupape (25), présente au moins une seconde ouverture de passage (20) et est supporté de manière non-rotative dans le boîtier (4).

2. Soupape de disque selon la revendication 1, **caractérisée en ce que** l'au moins une butée de rotation (52, 53) est disposée au niveau du couvercle (6), et est notamment réalisée d'un seul tenant avec le couvercle (6).

3. Soupape de disque selon l'une quelconque des revendications précédentes, **caractérisée en ce que** l'arbre de commande (33) présente au moins une saillie de support (42) qui saillit radialement et forme une première butée axiale (43) pour un élément de ressort (32) maintenu précontraint entre la saillie de support (42) et le disque de soupape (25).

4. Soupape de disque selon l'une quelconque des revendications précédentes, **caractérisée en ce que** l'arbre de commande (33) est relié avec le disque de soupape (25), notamment à engagement positif, au moyen d'un dispositif anti-rotation (54).

5. Soupape de disque selon la revendication 4, **caractérisée en ce que** le dispositif anti-rotation (54) présente un élément intermédiaire (31) qui est relié de manière non-rotative avec l'arbre de commande (33) par engagement positif, et est relié de manière non-rotative avec le disque de soupape (25) par un autre engagement positif.

6. Soupape de disque selon la revendication 5, **caractérisée en ce que** l'élément intermédiaire (31) présente au moins une nervure de pincement (45) à déformation élastique au moins dans certaines régions, afin de permettre le prémontage de l'arbre de commande (33), de l'élément de ressort (32), de l'élément intermédiaire (31) et du disque de soupape (25).

7. Soupape de disque selon l'une quelconque des revendications précédentes, **caractérisée en ce que** le disque de soupape (25) et le disque d'étanchéité (18) se trouvent entre au moins une des chambres (55, 56) et au moins une autre des chambres (57).

8. Soupape de disque selon l'une quelconque des revendications précédentes, **caractérisée en ce que** le disque d'étanchéité (18) est disposé entre le disque de soupape (25) et une cloison intermédiaire (14) du boîtier de distribution (5).

9. Soupape de disque selon la revendication 8, **caractérisée en ce que** le contour du disque d'étanchéité (18) correspond au moins sensiblement au contour de la cloison intermédiaire (14).

10. Soupape de disque selon la revendication 8 ou la revendication 9, **caractérisée en ce qu'**un élément d'étanchéité est disposé entre le disque d'étanchéité (18) et la cloison intermédiaire (14), l'élément d'étanchéité étant notamment un joint d'étanchéité profilé (15) avec un contour correspondant au contour du disque d'étanchéité (18) et/ou de la cloison intermédiaire (14), et étant formé notamment d'un matériau à déformation élastique.

11. Soupape de disque selon l'une quelconque des revendications précédentes 4 à 6, **caractérisée en ce que** le dispositif anti-rotation (54) est configuré de manière asymétrique afin d'éviter un montage incorrect.
